# EUROPEAN PATENT APPLICATION

(11) **EP 4 507 046 A1**
(43) Date of publication of application: **12.02.2025**
(21) Application number: 23833564.0
(22) Date of filing: 21.06.2023
(51) Int. Cl.: H01M 10/04, B65G 61/00

(54) **PRE-STACKING DEVICE, BATTERY PROCESSING APPARATUS AND PRE-STACKING METHOD**

(71) Applicant: Contemporary Amperex Technology (Hong Kong) Limited, Central, Central And Western District (HK)
(72) Inventor: MA, Yuhang, Ningde, Fujian 352100 (CN); JING, Zhiyong, Ningde, Fujian 352100 (CN); LUO, Jian, Ningde, Fujian 352100 (CN)
(74) Representative: Gong, Jinping
(86) International application number: PCT/CN2023/101791
(87) International publication number: WO 2024/259655

(57) **Abstract**

The present application relates to a pre-stacking device, a battery processing equipment and a pre-stacking method. The pre-stacking device includes a mounting base (10), a tray (20), and a pushing assembly (50). The mounting seat (10) includes at least one station, the tray (20) is arranged on the mounting seat (10), the tray (20) is used to carry at least two battery cells (200) arranged along their thickness direction (L1), and the pushing assembly (50) is movably arranged at one of the stations along the thickness direction (L2) of the battery cells (200). The pushing assembly (50) is used to drive the battery cells (200) on the tray (20) to move along the thickness direction (L2) of the battery cells (200) on the corresponding station, so that every two adjacent battery cells (200) are attached to each other. As such, with the present application, the close stacking of multiple battery cells (200) along their thickness direction (L2) can be realized through the pushing operation by the pushing assembly (50) when the tray (20) and the battery cells (200) on the tray move to the station where the pushing assembly (50) is located.

## Description

### TECHNICAL FIELD

The present application relates to the technical field of batteries and in particular to a pre-stacking device, battery processing equipment and pre-stacking method.

### BACKGROUND ART

In the battery production process, it is necessary to pre-stack multiple battery cells, and then assemble the pre-stacked battery cells to form a battery module or battery.

However, in the current battery cell pre-stacking process, the stacking procedure is complicated and the stability is poor, resulting in low efficiency of the pre-stacking process, and in severe cases, also affecting the structural stability of the battery module or battery formed by subsequent assembly.

### SUMMARY OF THE INVENTION

In view of this, the present application provides a pre-stacking device, battery processing equipment and a pre-stacking method.

In a first aspect, the present application provides a pre-stacking device including a mounting seat, a tray, and a pushing assembly. The mounting seat includes at least one station, the tray is arranged on the mounting seat, the tray is used to carry at least two battery cells arranged along their thickness direction, and the pushing assembly is movably arranged at one of the stations along the thickness direction of the battery cells. The pushing assembly is used to drive the battery cells on the tray to move along the thickness direction of the battery cells on the corresponding station, so that every two adjacent battery cells are attached to each other.

In the technical solution of the embodiment of the present application, the close stacking of the multiple battery cells along their thickness direction can be realized through the pushing operation by the pushing assembly when the tray and the battery cells on the tray move to the station where the pushing assembly is located, thereby providing an automatic stacking device.

In some embodiments, the stations include a first station, a second station and a third station arranged at intervals in the circumferential direction, and the tray is configured to rotate between the first station, the second station and the third station. The first station is used for loading the battery cells on the tray, the pushing assembly is arranged on the second station, and the third station is used for unloading the battery cells that have been attached to each other off the tray.

**In** the technical solution of the embodiment of the present application, a simple multi-station stacking procedure is formed to realize the loading, stacking, and unloading process of the battery cells. The placement and removal of battery cells on different stations do not affect each other, and pre-stacking is divided into multiple steps that proceed in a cycle to realize automatic pre-stacking, so that the efficiency of battery cell pre-stacking is improved, the pre-stacking stability is good, and production is conducted on different stations synchronously without affecting each other, thereby improving production efficiency.

**In** some embodiments, the mounting seat includes a base and a support member rotatably arranged on the base, the base has a first station, a second station and a third station arranged at intervals along its circumferential direction, and multiple trays are provided on the support member and rotate along with the support member. When one of the trays moves to the first station, there is a tray on each of the second station and the third station.

In the technical solution of the embodiment of the present application, when the tray on the first station is loading, the tray on the fourth station is pre-stacking, and the tray on the second station is unloading, which goes round and round without affecting each other, thereby improving production efficiency.

In some embodiments, the mounting seat also has a fourth station arranged at an interval between the first station and the second station. When the tray is located at the fourth station, at least two battery cells are pre-stacked on the tray along their thickness direction.

In the technical solution of the embodiment of the present application, pre-stacking of formula cells can be realized simultaneously, thereby improving production efficiency.

In some embodiments, the pre-stacking device further includes a positioning assembly arranged at the first station to fix the tray on the first station.

In the technical solution of the embodiment of the present application, by providing the positioning assembly, automatic positioning of the first station can be realized and the tray can be automatically stopped for operation at various stations.

In some embodiments, the pre-stacking device further includes a first clamping assembly configured to be movably arranged on the mounting seat along the height direction of the battery cells. The first clamping assembly can clamp the battery cells on the tray along the width direction of the battery cells when the tray moves to the second station.

In the technical solution of the embodiment of the present application, through the movable arrangement of the first clamping assembly in the height direction of the battery cells, the first clamping assembly can smoothly realize clamping of the battery cells when the battery cells move to the second station, thereby ensuring the effectiveness of pushing by the pushing assembly. Moreover, the first clamping assembly does not affect the movement of the battery cell along with the tray in other cases, and the movement of the battery cell among multiple stations can be smoothly realized.

In some embodiments, the pre-stacking device further includes a second clamping assembly arranged on the tray to clamp the battery cells on the tray along the width direction of the battery cells. The first clamping assembly is arranged at an interval from the second clamping assembly along the height direction of the battery cells.

In the technical solution of the embodiment of the present application, the second clamping assembly and the first clamping assembly can be spaced apart from each other along the height direction of the battery cell and can clamp and fix the opposite ends of the battery cell in the height direction, so that the friction between the battery cell and the supporting surface thereof can be kept in balance, thereby making the pre-stacking process of the battery cells smoother, reducing the probability of the battery cells falling during the pre-stacking process, and making stacking of the battery cells more stable.

In some embodiments, both the first clamping assembly and the second clamping assembly include a first clamping member and a second clamping member respectively arranged on two sides of the tray along the width direction of the battery cell, and at least one of the first clamping member and the second clamping member is configured to be movably arranged along the width direction of the battery cell.

In the technical solution of the embodiment of the present application, by providing the first clamping member and the second clamping member, the battery cell can be smoothly clamped, so that the battery cell can be stably placed on the tray, and the battery cell can be kept in balance during pressing.

In some embodiments, the second clamping assembly further includes a main body and a first driving member, and the first driving member is connected between the main body and the mounting seat to drive the main body to move along the height direction of the battery cell;
where the first clamping member and the second clamping member in the second clamping assembly are arranged on the main body.

In the technical solution of the embodiment of the present application, by providing the main body and the first driving member, the first clamping member and the second clamping member can be brought along to move along the height direction of the battery cell, so as to clamp and fix the battery cell during pressing and avoid the battery cell when it does not need to be pressed.

In some embodiments, the second clamping assembly further includes a limiting assembly arranged on the main body and located between the first clamping member and the second clamping member, and the limiting assembly is used to press the battery cells on the tray along the height direction of the battery cells.

In the technical solution of the embodiment of the present application, when the first clamping member and the second clamping member clamp an upper side of the battery cell along the width direction of the battery cell, the limiting assembly is located between the first clamping member and the second clamping member and can press the battery cell downwards, so that the battery cell can be stably supported on the support surface of the tray. Thus, the battery cell can be more stable during the pre-stacking process.

In some embodiments, the limiting assembly includes an adjustment member and a pressing member, the adjustment member is telescopically connected between the main body and the pressing member along the height direction of the battery cell, and the pressing member is used to press the battery cells on the tray along the height direction of the battery cells.

In the technical solution of the embodiment of the present application, by providing the adjustment member and the pressing member, the battery cell can be pressed against the tray more stably, so that the battery cell can be kept in balance in the process of being pushed.

In some embodiments, the pressing member includes a connecting portion and a rolling portion, the connecting portion is connected to the adjustment member, and the rolling portion is rollably arranged on the connecting portion along the thickness direction of the battery cell to be rollably pressed against the battery cells on the tray along the height direction of the battery cells.

In the technical solution of the embodiment of the present application, by providing the rolling portion, rollable pressing can be realized between the pressing member and the battery cell, and when the battery cells move closer to each other along the thickness direction, the pressing force can be continuously applied, so that the pressing process is more stable.

In some embodiments, the pushing assembly includes an abutting member and a pushing member, the abutting member is arranged on the tray, the pushing member is movably arranged on the mounting seat along the thickness direction of the battery cell, and the abutting member and the pushing member are respectively arranged on two sides of the tray along the thickness direction of the battery cell, and the pushing member is configured to be able to push the battery cells on the tray along the thickness direction of the battery cells to abut against the abutting member.

In the technical solution of the embodiment of the present application, through cooperation between the abutting member and the pushing member, pre-stacking of multiple battery cells can be smoothly realized, so that the battery cells are closely attached along their thickness direction so as to facilitate subsequent assembly.

In some embodiments, the mounting seat includes a base and a support member rotatably arranged on the base, and the support member has a pressing position and at least two pre-stacking positions arranged at intervals along the circumferential direction thereof, and a tray and the first clamping assembly are correspondingly arranged at each pre-stacking position; the second clamping assembly and the pushing assembly are both arranged at the pressing position;

where the second clamping assembly is configured to, when one of the trays is rotated to the pressing position, clamp the battery cells on the tray along the width direction of the battery cells; and the pushing assembly is configured to, when one of the trays is rotated to the pressing position, push the battery cells on the tray.

In the technical solution of the embodiment of the present application, by providing the support member, the battery cells can be stacked synchronously at multiple pre-stacking positions, and sequentially rotated to the pressing positions for pressing, thereby improving the efficiency of the process of battery cell pre-stacking.

In some embodiments, the pre-stacking device further includes a detection assembly arranged on the tray. The detection assembly is used to detect whether there is a battery cell on the tray.

In the technical solution of the embodiment of the present application, by providing the detection assembly, the pushing assembly can be intelligently controlled according to the detection structure of the detection assembly, so as to avoid safety accidents.

In a second aspect, the present application provides a battery processing equipment, including the above-mentioned pre-stacking device.

In a third aspect, the present application provides a pre-stacking method, including the steps of:
controlling a tray to move to a first station of a mounting seat, and placing at least two battery cells on the tray along their thickness direction;
controlling the tray to move to a second station of the mounting seat, and controlling a pushing assembly to drive the battery cells on the tray along the thickness direction of the battery cells to move, so that every two adjacent battery cells are attached to each other; and
controlling the tray to move to a third station of the mounting seat, and removing the battery cells from the tray.

In the technical solution of the embodiment of the present application, a simple multi-station stacking procedure is formed to realize the loading, stacking, and unloading process of the battery cells. The placement and removal of battery cells on different stations do not affect each other, and pre-stacking is divided into multiple steps that proceed in a cycle to realize automatic pre-stacking, so that the efficiency of battery cell pre-stacking is improved, the pre-stacking stability is good, and production is conducted on different stations synchronously without affecting each other, thereby improving production efficiency.

In some embodiments, this method further includes the step of: controlling a tray to move to a fourth station of the mounting seat, and placing at least two battery cells on the tray along their thickness direction.

In the technical solution of the embodiment of the present application, the pre-stacking device of the present application can not only realize simultaneous stacking and unloading of the formula cells, but also realize multiple loadings of the battery cells in the same placement direction, thereby avoiding falling of the battery cells due to excessive loading at one time.

In some embodiments, this method further includes, after placing at least two battery cells on the tray along their thickness direction:
clamping the battery cells on the tray along the width direction of the battery cells, the width direction of the battery cells being perpendicular to the thickness direction of the battery cells.

In the technical solution of the embodiment of the present application, clamping of the battery cell can be smoothly realized when the battery cell moves to the second station, thereby ensuring the effectiveness of pushing by the pushing assembly. Moreover, in other cases, the movement of the battery cell following the tray is not affected, and the movement of the battery cell among a plurality of stations can be smoothly realized.

The above description is only a summary of the technical solutions of the present application. To make the technical means of the present application clearer and implementable in accordance with the disclosure of the specification, and to make the above and other objectives, features and advantages of the present application more comprehensible, specific implementations of the present application are provided below.

### DESCRIPTION OF DRAWINGS

Various other advantages and benefits will become apparent to those of ordinary skill in the art upon reading the following detailed description of the implementations. The drawings are intended for the purpose of illustrating the implementations only and shall not be construed as limitation of the present application. Also, the same components are denoted by the same reference numerals throughout the drawings. In the drawings:
Fig. 1 is a schematic structural view of a pre-stacking device according to one or more embodiments;
Fig. 2 is a top view of a pre-stacking device according to one or more embodiments;
Fig. 3 is a schematic structural view of a tray in a pre-stacking device according to one or more embodiments;
Fig. 4 is a top view of a tray in a pre-stacking device according to one or more embodiments;
Fig. 5 is a schematic structural perspective view illustrating cooperation between a first clamping assembly and a pushing assembly in a pre-stacking device according to one or more embodiments;
Fig. 6 is a schematic structural view illustrating cooperation between a first clamping assembly and a pushing assembly in a pre-stacking device according to one or more embodiments;
Fig. 7 is a partial enlarged view of Fig. 5; and
Fig. 8 is a schematic flowchart of a pre-stacking method according to one or more embodiments.
100. pre-stacking device; 10. mounting seat; 20. tray; 30. first clamping assembly; 40. second clamping assembly; 50. pushing assembly; 11. first station; 12. fourth station; 13. second station; 14. third station; 15. base; 16. support member; 41. first clamping member; 42. second clamping member; 31. main body; 32. first driving member; 33. limiting assembly; 34. lifting member; 51. abutting member; 52. pushing member; 331. adjustment member; 332. pressing member; 3321. connecting portion; 3322. rolling portion; 50. positioning assembly; 60. detection assembly; 200. battery cell; L1. thickness direction; L2. width direction; L3. height direction.

### DETAILED DESCRIPTION

Examples of the technical solutions of the present application will be described in detail below in conjunction with the drawings. The following embodiments are merely intended to illustrate the technical solutions of the present application more clearly, and therefore are only intended as examples and shall not be intended to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an associative relationship for describing associated objects, indicating that there may be three relationships, for example A and/or B may represent three situations: A alone, both A and B, and B alone. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "central," "longitudinal," "transverse," "length," "width," "thickness," "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

At present, from the perspective of the development of the market situation, power batteries are more and more widely used. The power batteries are used in energy storage power source systems such as hydraulic, thermal, wind and solar power stations as well as in electric vehicles such as electric bicycles, electric motorcycles and electric cars, and other fields. With the continuous expansion of the application field of the power batteries, the market demand is also constantly expanding.

A battery cell is the smallest unit that makes up a battery. Specifically, multiple battery cells can be connected in series, in parallel or in parallel-series connection to form a battery module, and then one or more battery modules are connected and assembled into a battery. Of course, multiple battery cells can also be directly assembled into a battery. The parallel-series connection means that the multiple battery cells are connected in both series and parallel.

In the process of forming a battery module or battery from battery cells, it is usually necessary to apply adhesive on the surface of the battery cells, and then pre-stack multiple battery cells along the thickness direction so that the battery cells can be tightly attached to each other and then bonded and fixed to each other through the adhesive tape on the surfaces of the adjacent battery cells.

However, in the current pre-stacking process, the pre-stacking procedure is complex and poor in stability, which will not only cause multiple battery cells to fall at the same time, but also greatly reduce the stacking efficiency, affecting the efficiency of the battery cell pre-stacking process, and even affecting the structural stability of the battery module or battery formed by assembly of the battery cells.

Based on the above considerations, in order to solve the problem of low pre-stacking efficiency and poor stability of the current battery cell pre-stacking process, one or more embodiments of the present application provide a pre-stacking device, the pre-stacking method enabling the batteries to be removed after being stably pre-stacked so as to realize automatic and stable stacking, thereby improving production efficiency and reducing costs.

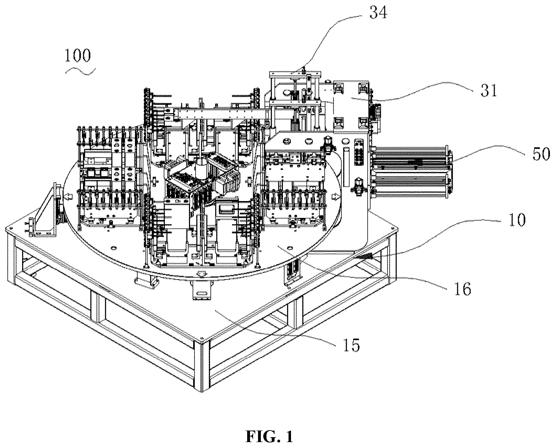

Referring to Figs. 1 to 4, the present application provides a pre-stacking device 100. The pre-stacking device 100 includes a mounting seat 10, a tray 20, and a pushing assembly 50. The mounting seat 10 includes at least one station, the tray 20 is arranged on the mounting seat 10, the tray 20 is used to carry at least two battery cells 200 arranged along their thickness direction L1, and the pushing assembly 50 is movably arranged at one of the stations along the thickness direction L2 of the battery cells 200. The pushing assembly 50 is used to drive the battery cells 200 on the tray 20 to move along the thickness direction L2 of the battery cells 200 on the corresponding station, so that every two adjacent battery cells 200 are attached to each other.

The mounting seat 10 refers to a structure that can provide a basis for installation of the tray 20 and the pushing assembly 50. The tray 20 refers to a structure provided on the mounting seat 10 that can provide space for supporting and stacking at least two battery cells 200. Multiple battery cells 200 can be clamped along the thickness direction L1 of the battery cells 200 and placed on the tray 20 by an external manipulator or a handling device. At this time, since the battery cells 200 are not subject to any force, they are loosely arranged and have not yet formed a tight stack.

Then, the movement of the tray 20 is controlled so that the tray 20 moves to the station where the pushing assembly 50 is located. The battery cells 200 are generally stacked with the side where the terminal posts are provided facing upwards. At this time, the height direction L3 of the battery cells 200 refers to the direction from one side surface provided with the terminal posts to the opposite side surface, the width direction L2 of the battery cells 200 refers to the direction perpendicular to the height direction L3 of the battery cells 200 and parallel to the direction of the large surface of the battery cells 200, and the thickness direction L1 of the battery cells 200 refers to the direction perpendicular to the large surface of the battery cells 200. The large surface of the battery cells 200 generally refers to the side surface of the battery cells 200 with the largest area.

When the pushing assembly 50 exerts pressure on the battery cells 200, the pushing assembly 50 first contacts the large surface of one of the battery cells 200, and then continues to push along the thickness direction L1 of multiple battery cells 200 to keep the friction between the battery cells 200 and their supporting surfaces in balance, so that the large surfaces of the multiple battery cells 200 are in direct contact with each other, and balance is kept between various battery cells 200, so as to complete stable pre-stacking and prevent falling of the battery cells 200.

When the pushing assembly 50 pushes the battery cells 200, it may be in direct surface-to-surface contact with the large surface of the battery cells 200, or may form a spherical structure to abut against the large surface of the battery cells 200. It is to be noted that the contact of the pushing assembly 50 with the battery cells 200 and the force it exerts during the pre-stacking process must ensure that the battery cells 200 are not damaged.

With the pre-stacking device 100 provided by the present application, the close stacking of multiple battery cells 200 along their thickness direction L2 can be realized through the pushing operation by the pushing assembly 50 when the tray 20 and the battery cells 200 on the tray move to the station where the pushing assembly 50 is located.

It can be understood that after the stacking is completed, the tray 20 and the battery cells 200 stacked thereon can be removed for the next step of operation.

In some embodiments, referring to Figs. 1 to 4, the stations of the mounting seat 10 include a first station 11, a second station 13 and a third station 14 arranged at intervals in the circumferential direction, and the tray 20 is configured to rotate between the first station 11, the second station 13 and the third station 14.

The first station 11 is used for loading the battery cells 200 on the tray 20, the pushing assembly 50 is arranged on the second station 13, and the third station 14 is used for unloading the battery cells 200 that have been attached to each other off the tray 20.

The second station 13 refers to the station on the mounting seat 10 for pressing and stacking multiple battery cells 200. Specifically, the battery cells 200 are moved from the previous process to the second station 13, and the multiple battery cells 200 are sequentially stacked along the thickness direction L1 at the second station 13 to realize pre-stacking of the battery cells 200 so that the multiple battery cells 200 can be closely attached to each other.

The first station 11, the second station 13 and the third station 14 can swap with each other through the rotation or movement or other motions of the mounting seat 10, and the tray 20 can move from the first station 11 to the second station 13 and then move to the third station 14, and then return from the third station 14 to the first station 11. The process in which the tray 20 rotates from the first station 11 in a circle to return to the first station 11 is called one pre-stacking process. An external manipulator or handling device can place the battery cells 200 on the tray 20 at the first station 11, and can also remove the battery cells 200 from the third station 13.

After the multiple battery cells 200 are loosely placed on the first station 11 along their thickness direction L1, the movement of the tray 20 is controlled so that the tray 20 moves from the first station 11 to the second station 13. When the tray 20 is located at the second station 13, the pushing assembly 50 on the second station 13 exerts pressure on the battery cells 200 to complete the pre-stacking and prevent the battery cells 200 from falling.

Then, the tray 20 finished with pre-stacking and the battery cells 200 thereon are controlled to move to the third station 14. At this time, the multiple battery cells 200 that have been stacked on the tray 20 can be removed by an external device to proceed to the next step of the process. After the battery cells 200 are removed from the tray 20 at the third station 14, the tray 20 can be controlled to continue to move back to the first station 11 of the device for the next pre-stacking process.

As such, with the pre-stacking device 100 of the present application, a simple multi-station stacking procedure is formed to realize the loading, stacking, and unloading process of the battery cells 200. The placement and removal of battery cells 200 on different stations do not affect each other, and pre-stacking is divided into multiple steps that proceed in a cycle to realize automatic pre-stacking, so that the efficiency of pre-stacking of the battery cells 200 is improved, the pre-stacking stability is good, and production is conducted on different stations synchronously without affecting each other, thereby improving production efficiency.

It can be understood that the stations on the mounting seat 10 may also include stations in addition to the first station 11, the second station 13 and the third station 14, which is not limited in the present application.

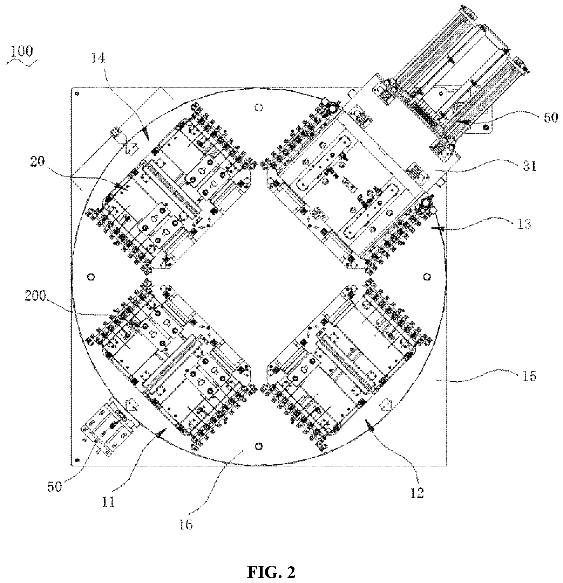

In some embodiments, referring to Figs. 1 and 2, the mounting seat 10 includes a base 15 and a support member 16 rotatably arranged on the base 15, the base 15 has a first station 11, a second station 13 and a third station 14 arranged at intervals along the circumferential direction thereof, and multiple trays 20 are provided on the support member 16 and rotate along with the support member 16. When one of the trays 20 moves to the first station 11, there is a tray 20 on each of the second station 13 and the third station 14.

Specifically, the support member 16 may be provided as a rotary table, and according to the positional relationship between the first station 11, the second station 13 and the third station 14 provided on the base 15, three trays 20 are correspondingly arranged at intervals along the circumferential direction of the support member 16. When the support member 16 brings along the three trays 20 thereon to rotate so that one of the trays 20 arrives at the first station 11, the other two trays 20 are located at the second station 13 and the third station 14 respectively.

As such, each tray 20 can load at the first station 11, pre-stack at the second station 13, and unload at the third station 14, and multiple trays 20 can be engaged in production synchronously at different stations at the same time. When the tray 20 at the first station 11 is loading, the tray 20 at the fourth station 12 is pre-stacking, and the tray 20 at the second station 13 is unloading, which goes round and round without affecting each other, thereby improving production efficiency.

In some embodiments, referring to Figs. 1 and 2, the mounting seat 10 also has a fourth station 12, and the fourth station 12 is arranged at an interval between the first station 11 and the second station 13. When the tray 20 is located at the fourth station 12, at least two battery cells 200 are pre-stacked on the tray 20 along their thickness direction L1.

The battery cells 200 may be arranged in different directions. Each battery cell 200 has two large surfaces. When the two large surfaces are oriented differently, the positive terminal post and the negative terminal post of the battery cells 200 are placed in different positions, so that two battery cells 200 that serve as a formula cell for each other are formed. That is, for two battery cells 200 that serve as a formula cell for each other at this time, assuming that the positive terminal post of one of the battery cells 200 is on the left and the negative terminal post is on the right, then the other battery cell 200 is equivalent to the one battery cell 200 rotated around the height direction L3 by 180 degrees, so as to be placed in such a manner that the positive terminal post is on the right and the negative terminal post is on the left.

After the pre-stacking process is completed, the battery cells 200 need to be moved to a different position. Therefore, in order to improve the efficiency of subsequent assembly, a first area and a second area can be formed on the tray 20. When the tray 20 is at the first station 11, one of the battery cells 200 that serve as a formula cell for each other is placed in the first area, and when the tray 20 is at the fourth station 12, the other one of the battery cells 200 that serve as a formula cell for each other is placed in the second area. After the tray 20 moves to the second station 13, the battery cells 200 are pre-stacked according to their polarities, so as to ensure that when the tray 20 moves to the third station 14, they can be picked up by the operator as needed.

Of course, it is also possible to load the battery cells 200 in the same placement direction in which the positive terminal posts and the negative terminal posts are arranged in exactly the same direction at the first station 11 and the fourth station 12. As such, multiple loadings can be performed while avoiding falling of the battery cells 200 due to excessive loading at one time.

In some embodiments, referring to Figs. 1 and 2, the pre-stacking device 100 further includes a positioning assembly 50 arranged at the first station 11 to fix the tray 20 on the first station 11.

The positioning assembly 50 can be a combination of a driving structure and a positioning protrusion, and a groove is provided at the corresponding position of the support member 16 or the tray 20. When the support member 16 brings along the trays 20 thereon to rotate, one of the trays 20 moves to the first station 11. At this time, the driving structure drives the positioning protrusion to extend and fit into the groove, and the support member 16 is stopped. At this time, the tray 20 is stably fixed on the first station 11 for loading.

After the loading is completed, the driving structure can also drive the positioning protrusion to retract. At this time, the support member 16 continues to rotate until the tray 20 for which loading at the first station 11 has just been completed moves to the fourth station 12, and at this time, another tray 20 moves to the first station 11 for loading, while the tray 20 at the fourth station 12 is undergoing loading at the fourth station 12, and so on.

Further, a sensing device may also be provided on the tray 20 and the positioning assembly 50, and when the positioning assembly 50 senses the tray 20, the positioning protrusion is immediately driven to extend and stop the support member 16.

As such, in the present application, by providing the positioning assembly 50, automatic positioning of the first station 11 can be realized and the tray 20 can be automatically stopped for operation at various stations.

In some embodiments, referring to Figs. 1, 2, 5 and 6, the pre-stacking device 100 further includes a first clamping assembly 30 configured to be movably arranged on the mounting seat 10 along the height direction L3 of the battery cells 200. The first clamping assembly 30 can clamp the battery cells 200 on the tray 20 along the width direction L2 of the battery cells 200 when the tray 20 moves to the second station 13. The width direction L2 of the battery cells 200 is perpendicular to the thickness direction L1.

Specifically, when the tray 20 moves to the second station 13, the first clamping assembly 30 can descend along the height direction L3 of the battery cells 200, the height direction L3 of the battery cells 200 being perpendicular to the width direction L2 and the thickness direction L1 of the battery cells 200, until the first clamping assembly 30 can smoothly clamp the upper side of the battery cells 200 along the width direction L2 of the battery cells 200, so that the battery cells 200 can be pressed by the pushing assembly 50.

When the tray 20 has not yet moved to the second station 13, the first clamping assembly 30 does not need to clamp the battery cells 200, then at this time, the first clamping assembly 30 rises along the height direction L3 of the battery cells 200, away from the support member 16, until the movement of the battery cells 200 on the tray 20 along with the tray 20 between the stations is not affected.

Through the movable arrangement of the first clamping assembly 30 in the height direction L3 of the battery cells 200, the first clamping assembly 30 can smoothly realize clamping of the battery cells 200 when the battery cells 200 move to the second station 13, thereby ensuring the effectiveness of pushing by the pushing assembly 50. Moreover, the first clamping assembly 30 does not affect the movement of the battery cells 200 along with the tray 20 in other cases, and the movement of the battery cells 200 among multiple stations can be smoothly realized.

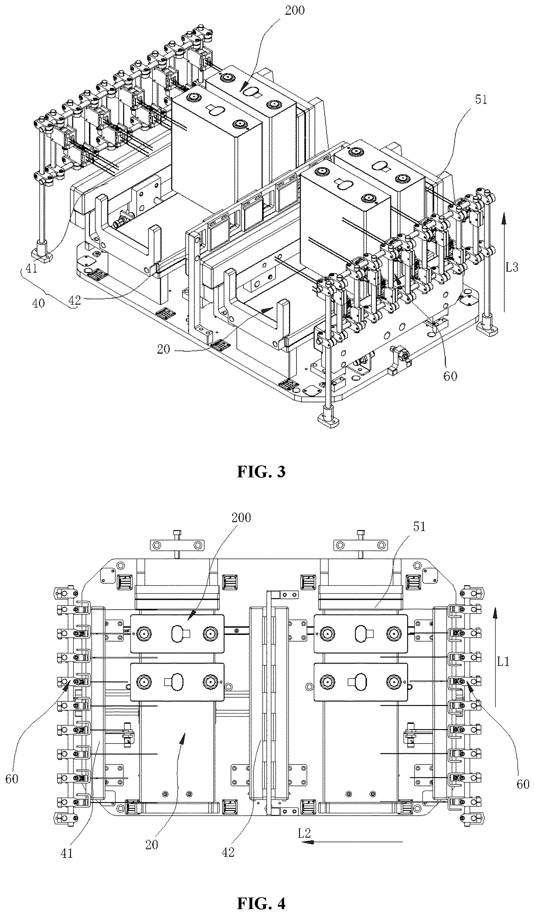

In some embodiments, referring to Figs. 3 and 4, the pre-stacking device 100 further includes a second clamping assembly 40 arranged on the tray 20 to clamp the battery cells 200 on the tray 20 along the width direction L2 of the battery cells 200. The first clamping assembly 30 is arranged at an interval from the second clamping assembly 40 along the height direction L3 of the battery cells 200.

When the battery cell 200 is placed on the tray 20, the battery cell 200 on the tray 20 is first clamped by the second clamping assembly 40 along the width direction L2 of the original battery cell 200, and then in the whole pre-stacking process, clamping of the battery cell 200 is maintained to prevent the battery cell 200 from falling after being placed on the tray 20.

When the tray 20 is moved to the second station 13, the first clamping assembly 30 is arranged at an interval from the second clamping assembly 40 along the height direction L3 of the battery cell 200 at the second station 13. Thus, the first clamping assembly 30 can clamp the battery cell 200 again along the width direction L2 of the battery cell 200 at the second station 13. At this time, the second clamping assembly 40 and the first clamping assembly 30 clamp the battery cell 200 at different positions in the height of the battery cell 200 respectively along its height direction L3, such as at the bottom end and the middle, or the middle and the top end.

The second clamping assembly 40 and the first clamping assembly 30 can be spaced apart from each other along the height direction L3 of the battery cell 200 and can clamp and fix the opposite ends of the battery cell 200 in the height direction L3, so that the friction between the battery cell 200 and the supporting surface thereof can be kept in balance, thereby making the pre-stacking process of the battery cells 200 smoother, reducing the probability of the battery cells 200 falling during the pre-stacking process, and making stacking of the battery cells 200 more stable.

In some embodiments, both the first clamping assembly 30 and the second clamping assembly 40 include a first clamping member 41 and a second clamping member 42 respectively arranged on two sides of the tray 20 along the width direction L2 of the battery cell 200, and at least one of the first clamping member 41 and the second clamping member 42 is configured to be movably arranged along the width direction L2 of the battery cell 200.

Specifically, the first clamping member 41 and the second clamping member 42 in the second clamping assembly 40 can be respectively arranged on two sides of the tray 20 via telescopic cylinders, so that the first clamping member 41 and the second clamping member 42 can approach or move away from each other along the width direction L2 of the battery cell 200. When the battery cell 200 is placed on the tray 20, the first clamping member 41 and the second clamping member 42 approach each other and clamp the battery cell 200. When the battery cell 200 needs to be removed from the tray 20, the first clamping member 41 and the second clamping member 42 move away from each other.

By providing the first clamping member 41 and the second clamping member 42, the battery cell 200 can be smoothly clamped, so that the battery cell 200 can be stably placed on the tray 20, and the battery cell 200 can be kept in balance during pressing.

Moreover, the first clamping member 41 and the second clamping member 42 are provided so that the first clamping assembly 30 and the second clamping assembly 40 are adapted to clamp a variety of battery cells 200 of different widths. As such, pre-stacking of battery cells 200 of different sizes can be realized by the same stacking device 100, which facilitates model exchange (different models of the battery cells 200).

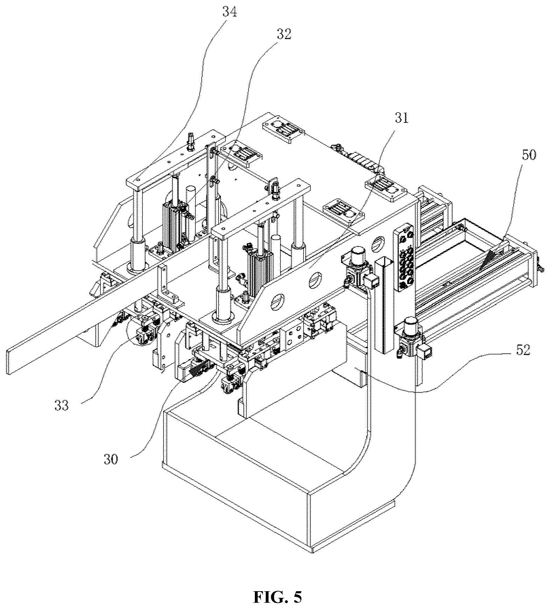

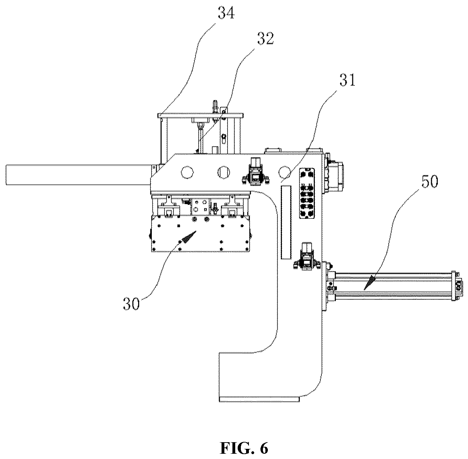

In some embodiments, referring to Figs. 5 and 6, the first clamping assembly 30 further includes a main body 31 and a first driving member 32, and the first driving member 32 is connected between the main body 31 and the mounting seat 10 to drive the main body 31 to move along the height direction L3 of the battery cell 200. The first clamping member 41 and the second clamping member 42 in the first clamping assembly 30 are arranged on the main body 31, and the pushing assembly 50 is movably connected to the main body 31 along the thickness direction L1 of the battery cell 200.

Specifically, the main body 31 can provide basis for installation of the first driving member 32, the pushing assembly 50, the first clamping member 41 and the second clamping member 42. The first driving member 32 may be, without limitation, provided as a press-down cylinder for driving the main body 31 and bringing along the first clamping member 41 and the second clamping member 42 on the main body 31 to move along the height direction L3 of the battery cell 200. The pushing assembly 50 can move on the main body 31 to approach or move away from the battery cell 200 on the tray 20.

By providing the main body 31 and the first driving member 32, the first clamping member 41 and the second clamping member 42 can be brought along to move along the height direction L3 of the battery cell 200, so as to clamp and fix the battery cell 200 during pressing and avoid the battery cell 200 when it does not need to be pressed.

Further, the first clamping assembly 30 also includes a lifting member 34, the first driving member 32 is driving-connected with the lifting member 34, and the lifting member 34 passes through the main body 31 and is connected with the first clamping assembly 30. When the first driving member 32 drives the lifting member 34 to move up and down, the first clamping assembly 30 is brought along to move up and down.

With such an arrangement, the first driving member 32 and the first clamping assembly 30 can be arranged on opposite sides of the main body 31, thereby making reasonable use of the assembly space.

In some embodiments, the first clamping assembly 30 further includes a limiting assembly 33 arranged on the main body 31 and located between the first clamping member 41 and the second clamping member 42, and the limiting assembly 33 is used to press the battery cells 200 on the tray 20 along the height direction L3 of the battery cells 200.

When the first clamping member 41 and the second clamping member 42 clamp an upper side of the battery cell 200 along the width direction L2 of the battery cell 200, the limiting assembly 33 is located between the first clamping member 41 and the second clamping member 42 and can press the battery cell 200 downwards, so that the battery cell 200 can be stably supported on the support surface of the tray 20. Thus, the battery cell 200 can be more stable during the pre-stacking process.

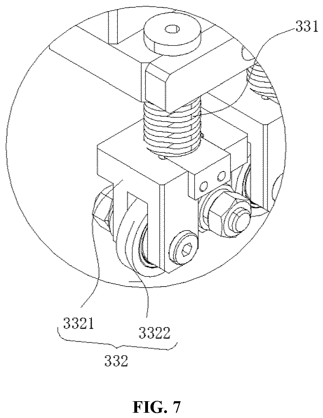

In some embodiments, referring to Figs. 5 to 7, the limiting assembly 33 includes an adjustment member 331 and a pressing member 332, the adjustment member 331 is telescopically connected between the main body 31 and the pressing member 332 along the height direction L3 of the battery cells 200, and the pressing member 332 is used to press the battery cells 200 on the tray 20 along the height direction L3 of the battery cells 200.

Specifically, the adjustment member 331 may be, without limitation, provided as a spring that is elastically connected between the main body 31 and the pressing member 332, so that the pressing member 332 can be elastically pressed against the battery cell 200.

Further, multiple adjustment members 331 and multiple pressing members 332 can be provided, and the adjustment members 331 and the pressing members 332 are provided in one-to-one correspondence.

It should be noted that a terminal post is protruded from each battery cell 200, and due to mechanical errors, there may be a certain difference between the heights of the terminal posts of different battery cells 200. Thus, each of the pressing members 332 and the adjustment members 331 can be correspondingly pressed against a terminal post of a battery cell 200. Each pressing member 332 can be adaptively pressed against the terminal post of the corresponding battery cell 200 through extension and retraction of the adjustment member 331, so that the pressing effect of the pressing member 332 on each battery cell 200 is more stable.

By providing the adjustment member 331 and the pressing member 332, the battery cell 200 can be flexibly and stably pressed against the tray 20, so that the battery cell 200 can be kept in balance during the process of pushing of the battery cell 200.

In some embodiments, referring to Figs. 5 to 7, the pressing member 332 includes a connecting portion 3321 and a rolling portion 3322, the connecting portion 3321 is connected to the adjustment member 331, and the rolling portion 3322 is rollably arranged on the connecting portion 3321 along the thickness direction L1 of the battery cell 200, and is used to be rollably pressed against the battery cells 200 on the tray 20 along the height direction L3 of the battery cells 200.

When there are multiple pressing members 332, each pressing member 332 includes a connecting portion 3321 and a rolling portion 3322. Specifically, the rolling portion 3322 can be, without limitation, provided as a roller that is rollably arranged on the connecting portion 3321. When the pressing member 332 is pressed against the battery cells 200, the pushing assembly 50 exerts pressure on the battery cells 200 along the thickness direction L1 of the battery cells 200, so that the battery cells 200 approach and are attached to each other along the thickness direction L1.

At the same time, when the battery cell 200 is displaced along the thickness direction L1 under the pushing force, the rolling portion 3322 can rollably press the battery cell 200, so that the pressing on the battery cell 200 is more stable and does not affect movement of the battery cell 200 in the thickness direction L1.

By providing the rolling portion 3322, rollable pressing can be realized between the pressing member 332 and the battery cells 200, and when the battery cells 200 move closer to each other along the thickness direction L1, the pressing force can be continuously applied, so that the pressing process is more stable.

In some embodiments, referring to Figs. 3 to 5, the pushing assembly 50 includes an abutting member 51 and a pushing member 52, the abutting member 51 is arranged on the tray 20, the pushing member 52 is movably arranged on the mounting seat 10 along the thickness direction L1 of the battery cell 200, and the abutting member 51 and the pushing member 52 are respectively arranged on two sides of the tray 20 along the thickness direction L1 of the battery cell 200, and the pushing member 52 is configured to be able to push the battery cells 200 on the tray 20 along the thickness direction L1 of the battery cells 200 to abut against the abutting member 51.

Specifically, the abutting member 51 is a baffle arranged on the tray 20. When the battery cell 200 moves to the second station 13 along with the tray 20, the pushing member 52 and the abutting member 51 are respectively located on two sides of the battery cell 200 along the thickness direction L1 of the battery cell 200. The pushing assembly 52 moves along the thickness direction L1 of the battery cells 200, and exerts a pushing force on the battery cells 200 along the thickness direction L1 of the battery cells 200, so that multiple battery cells 200 can be closely attached to each other.

Further, the pushing member 52 may be, without limitation, provided as a pressurization cylinder. When the battery cells 200 are arranged on the tray 20 along the thickness direction L1, the pushing assembly 52 extends and exerts a pushing force on the large surface of the battery cells 200, so that the multiple battery cells 200 can be closely attached to each other.

Through cooperation between the abutting member 51 and the pushing member 52, pre-stacking of multiple battery cells 200 can be smoothly realized, so that the battery cells 200 are closely attached along the thickness direction L1 thereof so as to facilitate subsequent assembly.

In some embodiments, referring to Figs. 3 to 4, the pre-stacking device 100 further includes a detection assembly 60 arranged on the tray 20. The detection assembly 60 is configured to detect whether there is a battery cell 200 on the tray 20.

The detection assembly 60 may be an infrared detection structure or the like. It can be understood that if no battery cell 200 is placed on the tray 20, and if the pushing assembly 52 is still pushing in the same procedure at this time, it may possibly collide directly with the abutting member 51.

By providing the detection assembly 60, the pushing assembly 50 can be intelligently controlled according to the detection structure of the detection assembly 60, so as to avoid safety accidents.

Based on the same concept as the above-mentioned pre-stacking device 100, the present application further provides a battery processing equipment including the above-mentioned pre-stacking device 100.

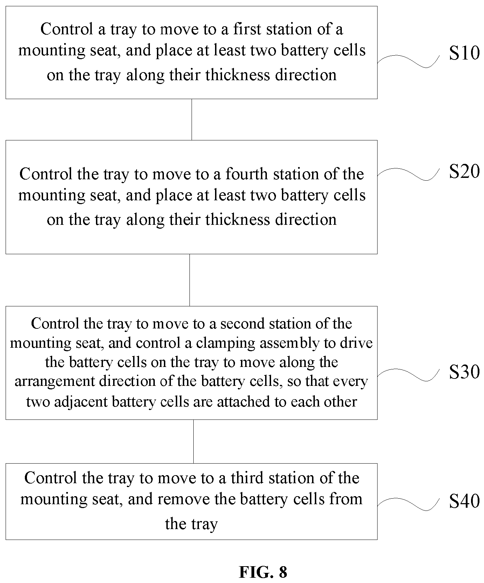

Referring to Fig. 8, based on the same concept as the above-mentioned pre-stacking device 100, according to one or more embodiments, the present application provides a pre-stacking method including the following steps.

S10: A tray 20 is controlled to move to a first station 11 of a mounting seat 10, and at least two battery cells 200 are placed on the tray 20 along their thickness direction L1.

S30: The tray 20 is controlled to move to a second station 13 of the mounting seat 10, and a pushing assembly 50 is controlled to drive the battery cells 200 on the tray 20 to move along the thickness direction L1 of the battery cells 200, so that every two adjacent battery cells 200 are attached to each other.

S40: The tray 20 is controlled to move to a third station 14 of the mounting seat 10, and the battery cells 200 are removed from the tray 20.

The first station 11, the second station 13 and the third station 14 are arranged at intervals in the circumferential direction of the mounting seat 10.

Specifically, the specific structural configurations of the mounting seat 10, the tray 20 and the pushing assembly 50 have been described in detail above, and description thereof will not be repeated here.

As such, according to the present application, with the method described above, a simple multi-station stacking procedure is formed to realize the loading, stacking, and unloading process of the battery cells 200. The placement and removal of battery cells 200 on different stations do not affect each other, and pre-stacking is divided into multiple steps that proceed in a cycle to realize automatic pre-stacking, so that the efficiency of pre-stacking of the battery cells 200 is improved, the pre-stacking stability is good, and production is conducted on different stations synchronously without affecting each other, thereby improving production efficiency.

In some embodiments, referring to Fig. 8, after the tray 20 is controlled to move to the first station 11 of the mounting seat 10 in step S10, the method further includes the following step.

S20: The tray 20 is controlled to move to a fourth station 12 of the mounting seat 10, and at least two battery cells 200 are placed on the tray 20 along their thickness direction L1.

The fourth station 12 is arranged at an interval between the first station 11 and the second station 13 along the circumferential direction.

With reference to the foregoing description, the pre-stacking device 100 of the present application can not only realize simultaneous stacking and unloading of the formula cells, but also realize multiple loadings of the battery cells 200 in the same placement direction, thereby avoiding falling of the battery cells 200 due to excessive loading at one time.

In some embodiments, after at least two battery cells 200 are placed on the tray 20 along their thickness direction L1 in step S10, the method further includes the following step.

S50: The battery cells 200 on the tray 20 are clamped along the width direction L2 of the battery cells 200, the width direction L2 of the battery cells 200 being perpendicular to the thickness direction L1 of the battery cells 200.

Specifically, the battery cells 200 can be clamped along the width direction L2 by the provided first clamping assembly 30. The specific structure of the first clamping assembly 30 has been described in detail above and description thereof will not be repeated here.

Further, steps S30 and S50 can be performed concurrently, or the pushing in step S30 can be performed after the clamping operation is completed in step S50. As such, clamping of the battery cell 200 can be smoothly realized when the battery cell 200 moves to the second station 13, thereby ensuring the effectiveness of pushing by the pushing assembly 50. Moreover, the first clamping assembly 30 does not affect the movement of the battery cell 200 along with the tray 20 in other cases, and the movement of the battery cell 200 among multiple stations can be smoothly realized.

According to one or more embodiments, first, multiple battery cells 200 are sequentially moved to the tray 20 of the first station 11 by an external manipulator, and the lower side of each battery cell 200 on the tray 20 is clamped by the second clamping assembly 40 so that it is stably placed on the tray 20. The support member 16 is rotated, and the tray 20 and the battery cells 200 thereon are moved to the fourth station 12, and the formula cells are placed on the tray 20 by the external manipulator.

As the support member 16 continues to be rotated, when the tray 20 thereof rotates to the second station 13, the first clamping assembly 30 is controlled to descend, and the upper side of the battery cell 200 is clamped and fixed by the first clamping assembly 30. Meanwhile, under the action of the adjustment member 331, the pressing member 332 is adaptively pressed against the terminal post of the corresponding battery cell 200.

Once the pressing is stabilized, the pushing member 52 is controlled to move toward the battery cell 200 to exert a pushing force on the large surface of the battery cell 200. Under the action of the pushing force, the multiple battery cells 200 approach each other along the thickness direction L1 and abut against the abutting member 51 until the multiple battery cells 200 are closely attached to each other. At this point, the pre-stacking of the battery cells 200 on the tray 20 is completed. The support member 16 continues to be rotated and moved to the third station 14, and removal is done by the manipulator, while the battery cells 200 on the next tray 20 are being pushed, and so on.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, but rather shall fall within the scope of the claims and the specification of the present application. **In** particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A pre-stacking device, comprising:
a mounting seat comprising at least one station;
a tray arranged on the mounting seat to carry at least two battery cells arranged along the thickness direction thereof; and
a pushing assembly movably arranged along the thickness direction of the battery cells on one of the stations;
wherein the pushing assembly is used to drive the battery cells on the tray to move along the thickness direction of the battery cells on the corresponding station, so that every two adjacent battery cells are attached to each other.

2. The pre-stacking device according to claim 1, wherein the stations comprise a first station, a second station and a third station arranged at intervals in the circumferential direction, and the tray is configured to rotate between the first station, the second station and the third station; and
the first station is used for loading the battery cells on the tray, the pushing assembly is arranged on the second station, and the third station is used for unloading the battery cells that have been attached to each other off the tray.

3. The pre-stacking device according to claim 2, wherein the mounting seat comprises a base and a support member rotatably arranged on the base, the base has the first station, the second station and the third station arranged at intervals along the circumferential direction thereof, and multiple trays are arranged on the support member and rotate along with the support member; and
when one of the trays moves to the first station, there is one tray on each of the second station and the third station.

4. The pre-stacking device according to any one of claim 2 or 3, wherein the mounting seat further has a fourth station arranged at an interval between the first station and the second station; and
the fourth station is used for loading the battery cells.

5. The pre-stacking device according to any one of claims 2-4, further comprising a positioning assembly arranged at the first station, wherein
the positioning assembly is used to fix the tray to the first station.

6. The pre-stacking device according to any one of claims 2-5, further comprising a first clamping assembly configured to be movably arranged along the height direction of the battery cells on the mounting seat; wherein
the first clamping assembly can clamp the battery cells on the tray along the width direction of the battery cells when the tray moves to the second station, the width direction of the battery cells being perpendicular to the thickness direction.

7. The pre-stacking device according to claim 6, further comprising a second clamping assembly arranged on the tray to clamp the battery cells on the tray along the width direction of the battery cells.
the first clamping assembly is arranged at an interval from the second clamping assembly along the height direction of the battery cells, the height direction of the battery cells being perpendicular to both the width direction and the thickness direction.

8. The pre-stacking device according to claim 7, wherein both the first clamping assembly and the second clamping assembly comprise a first clamping member and a second clamping member respectively arranged on two sides of the tray along the width direction of the battery cells, and at least one of the first clamping member and the second clamping member is configured to be movably arranged along the width direction of the battery cells.

9. The pre-stacking device according to claim 6, wherein the first clamping assembly further comprises a main body and a first driving member connected between the main body and the mounting seat to drive the main body to move along the height direction of the battery cells; and
wherein the first clamping member and the second clamping member in the first clamping assembly are arranged on the main body, and the pushing assembly is movably connected with the main body along the thickness direction of the battery cells.

10. The pre-stacking device according to claim 9, wherein the first clamping assembly further comprises a limiting assembly arranged on the main body and located between the first clamping member and the second clamping member, and the limiting assembly is used to press the battery cells on the tray along the height direction of the battery cells.

11. The pre-stacking device according to claim 10, wherein the limiting assembly comprises an adjustment member and a pressing member, the adjustment member is telescopically connected between the main body and the pressing member along the height direction of the battery cells, and the pressing member is used to press the battery cells on the tray along the height direction of the battery cells.

12. The pre-stacking device according to claim 11, wherein the pressing member comprises a connecting portion and a rolling portion, the connecting portion is connected to the adjustment member, and the rolling portion is rollably arranged on the connecting portion along the thickness direction of the battery cells to be rollably pressed against the battery cells on the tray along the height direction of the battery cells.

13. The pre-stacking device according to any one of claims 1-14, wherein the pushing assembly comprises an abutting member and a pushing member, the abutting member is arranged on the tray, the pushing member is movably arranged on the mounting seat along the thickness direction L1 of the battery cells, and the abutting member and the pushing member are respectively arranged on two sides of the tray along the thickness direction L1 of the battery cells; and
the pushing member is configured to be able to push the battery cells on the tray along the thickness direction L1 of the battery cells against the abutting member.

14. The pre-stacking device according to any one of claims 1-13, further comprising a detection assembly arranged on the tray, wherein
the detection assembly is used to detect whether there is the battery cell on the tray.

15. A battery processing equipment comprising a pre-stacking device according to any one of claims 1-14.

16. A pre-staking method, comprising the steps of:
controlling a tray to move to a first station of the mounting seat, and placing at least two battery cells on the tray along their thickness direction;
controlling the tray to move to a second station of the mounting seat, and controlling a pushing assembly to drive the battery cells on the tray along the thickness direction of the battery cells to move, so that every two adjacent battery cells are attached to each other; and
controlling the tray to move to a third station of the mounting seat, and removing the battery cells from the tray;
wherein the first station, the second station and the third station are arranged at intervals in the circumferential direction of the mounting seat.

17. The pre-stacking method according to claim 15, further comprising, after controlling the tray to move to the first station of the mounting base, the step of:
controlling the tray to move to a fourth station of the mounting seat, and placing at least two battery cells on the tray along their thickness direction; wherein the fourth station is arranged at an interval between the first station and the second station along the circumferential direction.

18. The pre-stacking method according to claim 15, further comprising, after controlling a tray to move to a first station of the mounting seat and placing at least two battery cells on the tray along their thickness direction, the step of:
clamping the battery cells on the tray along the width direction of the battery cells, the width direction of the battery cells being perpendicular to the thickness direction of the battery cells.
